Europäisches Patentamt

European Patent Office

Office européen des brevets

(11) Publication number:

**0 373 614**
**A2**

(12) **EUROPEAN PATENT APPLICATION**

(21) Application number: **89122990.8**

(22) Date of filing: **13.12.89**

(51) Int. Cl.5: **G06F 15/70**

(30) Priority: **16.12.88 US 285474**

(43) Date of publication of application:
**20.06.90 Bulletin 90/25**

(84) Designated Contracting States:
**DE FR GB IT NL**

(71) Applicant: **SCHLUMBERGER TECHNOLOGIES INC**
**2702 Orchard Parkway PO Box 32070**
**San Jose, CA 95152(US)**

(72) Inventor: **Nishihara, H Keith**
**1468 Richardson Avenue**
**Los Altos California 94022(US)**
Inventor: **Crossley, P Anthony**
**566 Arastradero Road**
**Palo Alto California 94306(US)**

(74) Representative: **Sparing - Röhl - Henseler**
**Patentanwälte**
**Rethelstrasse 123 Postfach 14 02 68**
**D-4000 Düsseldorf 1(DE)**

(54) **Method for direct volume measurement of three dimensional features in binocular stereo images.**

(57) A method is disclosed for measuring the volume of a pile of material on a substrate. A pair of binocular stereo images of the material are captured and digitized. The images are filtered using a Laplacian of Gaussian filter function. The signs of the filtered images are cross-correlated at various relative alignments to generate a correlation response. The center of area of the correlation response is determined by calculating the displacement of the center of symmetry of two regions of constant gradient. The volume of the material (in cubic pixels) between a reference plane and the viewed surface of the material is obtained by multiplying the area of the correlation window by the displacement of the center of symmetry. The volume of the material in physical units is obtained by multiplying the volume in cubic pixels by parameters determined by the imaging geometry.

FIG._8.

# METHOD FOR DIRECT VOLUME MEASUREMENT OF THREE DIMENSIONAL FEATURES IN BINOCULAR STEREO IMAGES

## Cross-Reference to Related Application

This application is a continuation-in part of co-pending commonly owned U.S. Patent Application entitled "Method For Directly Measuring Area Using Binocular Stereo Vision", Serial No. 117,704, filed Nov. 5, 1987, which is a continuation-in-part of co-pending commonly owned U.S. Patent Application entitled "System for Expedited Computation of Laplacian and Gaussian Filters and Correlation of their Outputs for Image Processing"' Serial No. 888,535, filed July 22, 1986.

## BACKGROUND OF THE INVENTION

This invention relates generally to the field of volume measurement and, particularly, to the measurement of the volume of a pile of material on a substrate using binocular stereo vision.

In many industrial situations, it is desirable to measure the volume of a pile of material whose shape is only roughly determined. In some situations, the density of the material is known and the material can be weighed to determine the volume. If, however, the material cannot be weighed easily, or the density of the material is unknown or variable, then an alternative technique is needed.

One such technique is to measure the height of the pile of material at a number of locations, build a dense topographic map of the surface, and integrate numerically under the topographic map. The height measurements may be made from stereo images, using the stereo correlation techniques described in the above referenced related patent applications. However, it would be preferable not to have to compute this complete surface description as an intermediate step; a better technique would derive the volume measurement in a single step from the stereo image pair. Such a single step measurement technique could be more easily implemented in high speed hardware.

## SUMMARY OF THE INVENTION

According to the invention, the volume of a pile of material on a substrate is measured by capturing a pair of binocular stereo images of the material, filtering the images, and correlating the filtered images at various relative alignments to obtain a correlation response. This correlation response curve is analyzed to estimate the volume of the material.

The preferred mode of filtering the images is to apply a Gaussian operator (to remove some of the higher spatial frequencies), and a Laplacian operator (a second derivative operator). The zero crossing of the filtered images correspond to edges in the texture features of the inputs at the scale determined by the size ($\sigma$) of the Gaussian operator. The signs of the filtered images are compared, and the results are combined to generate the correlation response.

The correlation curve is analyzed by finding the center of symmetry of the correlation curve within two regions of constant gradient. The center of symmetry may be found by computing a measure of asymmetry at selected alignments to generate a series of points, and interpolating between these points (using a curve fitting algorithm) in order to find the point of minimum asymmetry.

## BRIEF DESCRIPTION OF THE DRAWINGS

Fig. 1 is an illustration of the image capture and processing system of the preferred embodiment.
Fig. 2 is a flow chart of the method of the preferred embodiment.
Fig. 3 is a diagram of the geometry of the image capture system of Fig. 1.
Figs. 4a and 4b are a stereo pair of images of a pile of sugar.
Figs. 5a and 5b show the sign of the result of filtering the images of Figs. 4a and 4b.
Fig. 6 is a correlation response obtained from a flat scene in a correlation window.

Fig. 7 is a correlation response from an object having several elevations.

Fig. 8 is a composite correlation response and the three contributions from which it is obtained.

## DETAILED DESCRIPTION OF THE PREFERRED EMBODIMENT

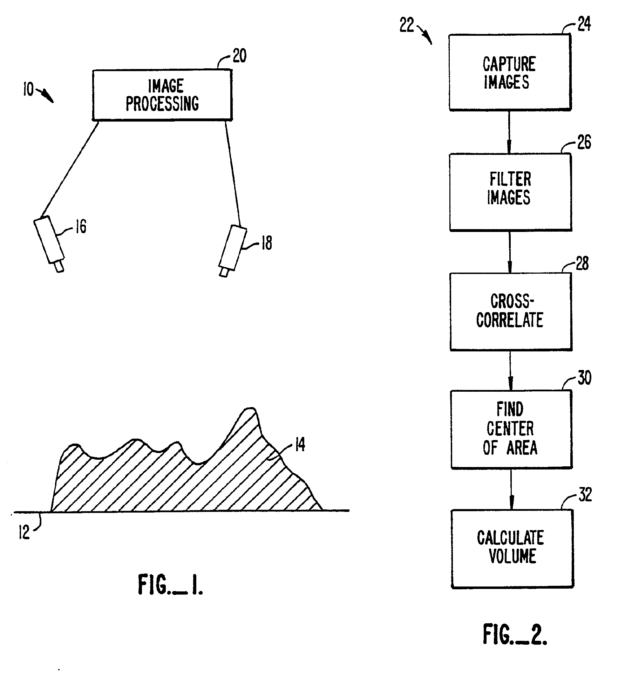

Figure 1 is an illustration of an image capture and image processing system 10 for measuring the volume of a three dimensional object. A flat substrate 12 supports a pile of material 14 to be measured. A left camera 16 and a right camera 18 are directed at the material 14 to obtain a pair of binocular stereo images. The cameras 16, 18 may comprise a stereo microscope with camera mounts on the eyepieces. Alternatively, conventional cameras may be used. Superior imaging is obtained when the stereo cameras are mounted with their imaging planes coplanar, using a shift lens to obtain overlapping image coverage. The images from cameras 16, 18 are digitized and processed by an image processor 20 to determine the volume of material 14. In this embodiment, image processor 20 utilizes the method and apparatus described in co-pending commonly owned patent application entitled "System for Expedited Computation of Laplacian and Gaussian Filters and Correlation of their Outputs for Image Processing" Serial No. 888,535, filed July 22, 1986, the disclosure of which is hereby incorporated by reference.

Figure 2 is a flow chart 22 of the general method of the preferred embodiment. At block 24, the stereo binocular images are captured and digitized. At block 26, each image is filtered using a Laplacian of Gaussian operator. At block 28, the signs of the filtered images are correlated at various relative alignments to obtain the correlation response. The steps of blocks 26 and 28 are performed by the method and apparatus of the above-referenced patent application. At block 30, the center of area, or mean disparity, of the correlation response is determined. At block 32, the volume of the material is determined using the center of area. The details of these steps are described below.

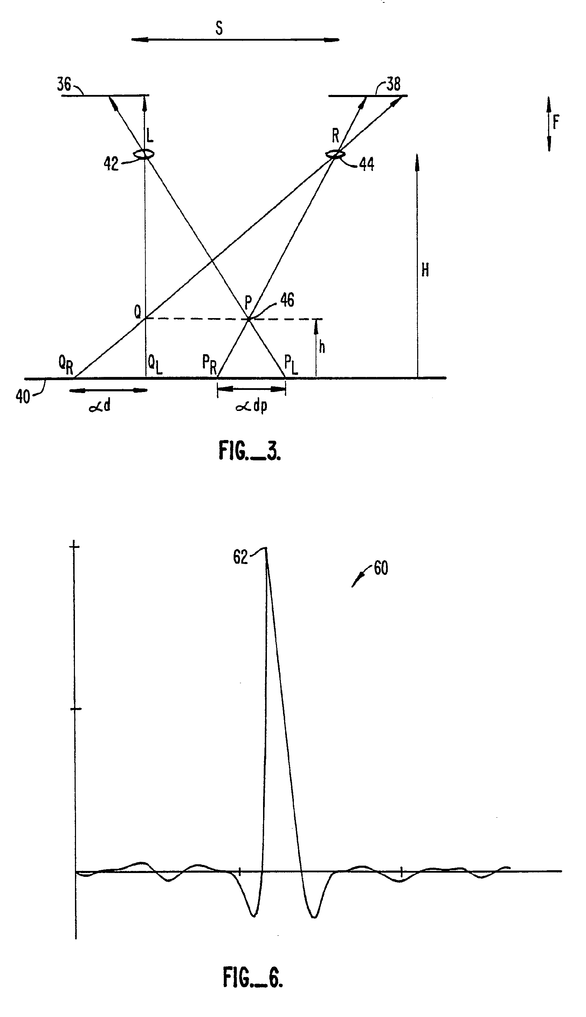

Figure 3 is a diagram of the imaging geometry of the imaging system of Fig. 1. The imaging planes 36, 38 (the film of the camera or the surface of the CCD in a video camera) are parallel to the substrate 40 to minimize trapezoidal distortion. The lenses 42, 44 of the cameras are at a height H units from the substrate, a distance F units from the imaging planes, and are separated by S units. The lenses 42, 44 are laterally displaced from the centers of the imaging planes 36, 38, so that the images obtained both correspond to the same area of the substrate. Ideally, any point on substrate 40 in the field of view of the cameras appears in the same position in both images. That is, features at the height of the substrate should align with no disparity between the pair of images. In practice, the images will not be perfectly aligned, and a calibration measurement is made by viewing the substrate with no material on it to determine the reference disparity between the two images of the substrate. This reference disparity is subtracted from subsequent disparity measurements to obtain the correct measurements.

Referring still to Fig. 3, a point P 46 at a height h units above the substrate projects to a point $P_R$ on the substrate plane as viewed by right camera 44, and to a point $P_L$ as viewed by left camera 42. The disparity d between the two positions $P_R$ and $P_L$ is dependent upon height h, and is independent of the location of point P in the field of view of the cameras. If the camera height H is large compared to the height h of the point P, the disparity d is effectively directly proportional to the height h of the feature. The relationship of the disparity, measured in pixels, to the height h is approximated by the equation:
(Equation 1)

$$d \approx \frac{S}{\alpha H} h$$

where $\alpha$ is the ratio of units to pixels in the imaging system such that a disparity of d pixels translates to $\alpha$ " d units.

For a feature of uniform height relative to the substrate, such as a mesa, the disparity (and thus the height of the feature) can be measured by determining the relative alignment of the two images at which the correlation of the two images is maximum. Preferably, the two images are filtered before they are correlated at various alignments. The two images are filtered by: a) involving each image with a two dimensional Gaussian function to enhance the low frequency structure, and b) applying a Laplacian operator to obtain the second derivative of each image, such that the zero crossings in the resulting images correspond to edges in the features in the original image (at a scale appropriate to the gaussian parameter $\sigma$). The Gaussian and Laplacian operators may be applied in either order, and rounding error is reduced by applying the Laplacian first. A sign image corresponding to the filtered images is obtained, in which each pixel is one bit deep, and is the same as the sign bit of the corresponding pixel in the filtered image. This sign image captures both the positions of the edges in the scene, and also the direction of the slopes of those edges.

3

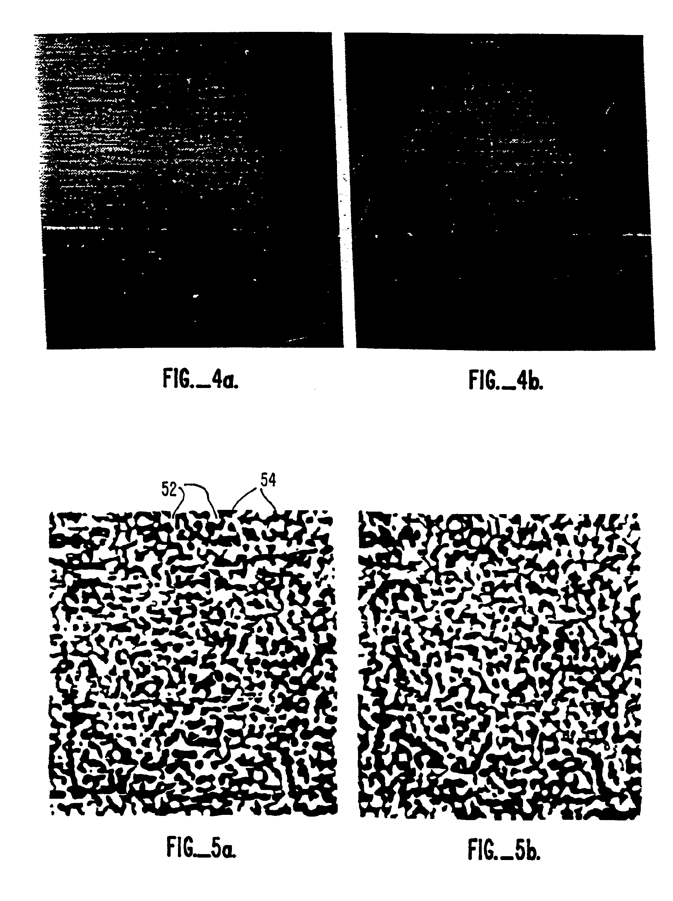

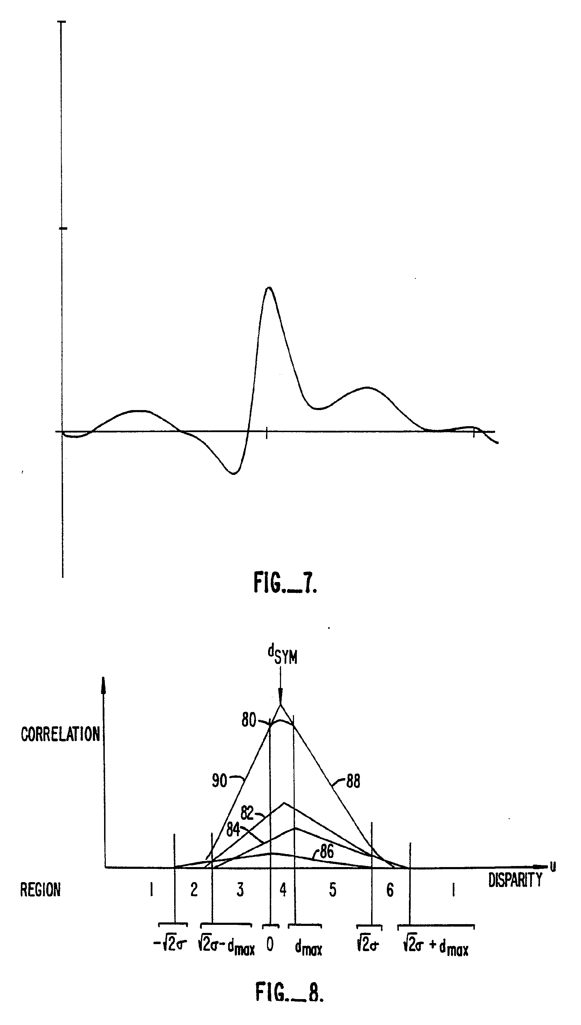

Figs. 4a and 4b show a stereo pair of images of a pile of sugar. Figures 5a and 5b show the sign of the result of applying the Laplacian and Gaussian ($\sigma$ = 4.0 pixels) filter function to the sugar images of Fig. 4. White areas 52 represent a positive sign and black areas 54 represent a negative sign.

The signs of the filtered images are then correlated at various relative alignments (u,v) of the two images, by applying the correlation function:

(Equation 2)

$$R(u,v) = \frac{1}{A} \sum_{i=1}^{X} \sum_{j=0}^{Y} \text{sign}(\text{left}_{i,j}) \cdot \text{sign}(\text{right}_{i+u, j+v})$$

where:

A is the Area X x Y of the correlation window; $\text{left}_{i,j}$ is the (i,j) th pixel in the left image; and $\text{right}_{i,j}$ is the (i,j) th pixel in the right image. u is the relative alignment between the images in a horizontal direction and v is the relative alignment between the images in a vertical direction.

A positive sign is given a value of + 1 and a negative sign is given a value of -1. Thus R forms a surface, whose value at any point (u,v) lies between -1 and + 1, indicating how well the two images match at that alignment.

In an ideal imaging situation, the highest cross correlation values are obtained for values of v = 0. In practice, the cameras may not be perfectly aligned, and a value of v is chosen to give the highest cross correlation values. This determination is a calibration measurement which is performed when the apparatus is set up, and only occasionally at other times.

Figure 6 shows a single peak correlation curve 60 which is obtained if the scene within the correlation window is flat. The peak 62 occurs at alignment (u,v) where the horizontal disparity u is related to the height h of the surface (above the reference substrate) by equation 1 above. Correlation curve 60 is a horizontal cross-section through the correlation response at v=0 (assuming no distortion). The height of the peak corresponds to how well the two images line up at alignment (u,v). Ideally, the height of the peak is determined by the proportion of the two images which correlate perfectly (i.e., the proportion of area of the correlation window at height h). In practice, noise alters the shape of the peak by rounding over the top.

If the correlation window contains two planes at different elevations, then the correlation function is (to a first approximation) the weighted linear sum of the correlation value of each surface, with the contribution of each surface weighted by the proportion of the area of the window occupied by that surface. It is thus possible to measure the volume of a single mesa-like area on a substrate, using the height of the correlation peak to determine the area of the mesa and using the horizontal displacement of the peak to determine the height of the mesa. Out co-pending U.S. patent application entitled "Method For Directly Measuring Area Using binocular Stereo Vision", Serial No. 117,704, filed Nov. 5, 1987, discloses such a method, and the disclosure of that application is hereby incorporated by reference.

The present invention extends to the measurement of the volume of objects that have arbitrary shapes. Such objects may be considered as containing a plurality of small regions, where each region is a particular height and area. In this case, the correlation response obtained thru binocular stereo imaging, filtering, and correlation at various alignments is the superposition of the curves due to each small region. Each region contributes to the disparity of the composite peak of the combined correlation surface in proportion to the region's area and height, and thus in proportion to the region's volume. Qualitatively, this result can be understood by considering the contributions of two peaks. A first peak is caused by a first region of height h1 and area A1, and a second peak is caused by a second region of height h2 and area A2. As the height h1 increases, the disparity of the first peak increases, moving it to the right along the horizontal axis, and therefore moving the composite peak in the same direction. If the area A1 of the first region increases, then the relative weight of this region's contribution to the composite correlation increases, increasing the height of the first peak relative to the height of the second peak, and moving the composite peak towards the first peak along the horizontal axis.

The above reasoning extends to a correlation response from a correlation window having many regions with surfaces at different levels. Each region will contribute to the disparity of the composite peak in proportion to the volume of the region. Fig. 7 shows a typical correlation response from an object having several elevations.

Quantitatively, the volume (in cubic pixels) of the material imaged is determined by multiplying the area A of the correlation window times $d_m$, where $d_m$ is the position of the center of area (i.e., the mean disparity) of the combined correlation response. The volume in cubic units is:
(Equation 3)

$$V = A \cdot \frac{H}{S} \alpha^3 \cdot d_m$$

The derivation of this result is given at pages 12 to 15 of Appendix A, an unpublished paper authored by the inventors.

Referring to Fig. 8, a composite correlation response curve 80 is the combination of the response contributions 82, 84, and 86, cuased by three regions within the correlation window. If the disparity range of the individual contribution is such that the correlation responses overlap as shown in Fig. 8, then center of area of combined response curve 80 is the center of symmetry for the two regions of constant gradient 88 and 90. (The derivation of this result is given at pages 15-17 of Appendix A; the disparity range is assumed to be within 0 to $\sqrt{2} \cdot \sigma$, where $\sigma$ is the gaussian parameter) This center of symmetry measurement provides a measure of the mean disparity by using data where the values are large enough that the contribution due to noise is small.

The center of symmetry is determined by computing a measure of asymmetry at various alignments, fitting a curve to these points, and finding the minimum. The measure of asymmetry $S(d)$ about a point d is the sum of the squares of the difference between the values of the correlation curve at d-x and d+x for x in an appropriate range:

(Equation 4)

$$S(d) \equiv \sum_{i=x_{lo}}^{x_{hi}} (R(d-x_i) - R(d+x_i))^2$$

An estimate of the center of symmetry is first made by finding the highest point $d_0$ in the correlation curve and evaluating $S(d)$ for this point and four points around the highest point (two points on each side, .5 and 1.0 pixels from $d_0$ in this example). If $d_0$ is near the center of symmetry, then $S(d_0)$ will be smaller than the other four values. If this is not the case, then a new estimate is made at point $d_1$, half a pixel above or below $d_0$, depending upon whether the smaller value of $S(d)$ was found above or below $d_0$. This procedure is repeated for each estimate $d_1$ until the best estimate is located at a point $d_n$. The five values of $S(d)$ at $d_n$ and the four points around it define a curve whose minimum is the center of symmetry. These five points are used to obtain the parameters of a quadratic form with best least squares fit. The value $d_{min}$, the value at which the measure of asymmetry is minimum, is given by:

(Equation 5)

$$d_{min} = \left[ \frac{7}{20} \right] \left[ \frac{2S_{-1} + 1S_{-0.5} - 1S_{0.5} - 2S}{2S_{-1} - 1S_{-0.5} - 2S_0 - 1S_{0.5} + 2S_1} \right] + d_n$$

The value of $d_{min}$ is an estimate of the center of symmetry, which can be used to obtain the volume. The derivation of the equation is given at page 20 of Appendix A.

The value $S(d_{min})$ of the asymmetry measure at $d_{min}$ gives an estimate of the asymmetry of the response at this point and should be near zero. If it is not, then this is an indication that there are parts of the image with disparity greater than the assumed maximum disparity, or that the shape of the peaks has deviated far from the assumed triangular shape. The result in such a case should be assigned a low level of confidence.

A novel method for measuring the volume of a pile of material has now been described. The method is suitable for implementation in fast hardware for low cost. Preliminary experimental results have yielded results which are accurate to within 10%. The technique can be tuned for a specific application to improve accuracy. Typical applications include the measurement of solder paste depositions on printed circuit boards; measurement of dough volume on baking trays; and measurement of the volume of structures and geographic features from stereo photographs taken from the air.

Variations and enhancements in the method of the preferred embodiment will be apparent to those of skill in the art. For example, some of the low pass convolution can be performed optically prior to sampling the image; the resolution of the imaging device can be reduced significantly, thereby reducing the number of needed pixel comparisons without impairing the accuracy of the results. For another example, the total area can be subdivided into smaller regions, and the technique described above can be applied to each region, integrating the results to obtain the total volume. This subdivision technique can reduce the disparity range in each region (compared to the range of the whole image) improving accuracy without requiring that each subdivision be locally flat. The regions can be subdivided recursively, until the disparity range in each region is small enough to obtain the desired accuracy. The disparity range can be obtained directly from the correlation curve, using the width of the response above some threshold value.

These and other modifications to the preferred embodiment are well within the scope of the invention, which is defined by the appended claims.

## Claims

1. A method for measuring the volume of material on a substrate comprising the steps of:
capturing a pair of binocular stereo images of the material;
filtering each of said captured images;
correlating said filtered images at various relative alignments of said images within a correlation window to generate a correlation response as a function of the relative alignment;
determining the center of area of the correlation response; and
calculating the volume of material from the center of area.

2. The method of claim 1 wherein said filtering step comprises the step of:
applying a Gaussian convolution operator to each of said images to remove some of the higher spatial frequencies.

3. The method of claim 1 wherein said filtering step further comprises the step of:
applying a Laplacian operator to each of said images.

4. The method of claim 3 wherein said correlating step comprises the step of comparing the signs of said filtered images at various relative alignments.

5. The method of claim 4 wherein said correlating step further comprises the step of combining the results of the comparing step for all points within a correlation window at each of said various relative alignments to generate a correlation value for each of said alignments.

6. The method of claim 5 wherein said determining step comprises the step of finding the center of symmetry of the correlation response within two regions of constant gradient.

7. The method of claim 6 wherein said finding step comprises the steps of:
computing a measure of asymmetry at selected alignments to generate a set of points;
fitting a curve to the generated set of points; and
finding the location of the minimum of said curve.

8. The method of claim 7 wherein said computing step comprises the steps of:
a) evaluating $S(d_0)$ at a point $d_0$, where $S(d)$ is a measure of asymmetry at a point $d$;
b) evaluating $S(d_i)$ at a set of points $d_i$ around the point $d_0$;
c) comparing $S(d_0)$ to the $S(d_i)$ evaluated at the set of points around $d_0$ to determine whether $S(d_0)$ is smaller than $S(d_i)$;
d) if $S(d_0)$ is not smaller than $S(d_i)$, selecting another point for $d_0$ and repeating steps a), b) and c); and
e) if $S(d_0)$ is smaller than $S(d_i)$, generating a set of points having asymmetry values $S(d_0)$ and $S(d_i)$.

9. The method of claim 8 wherein step a) comprises the step of evaluating $S(d_0)$ at a point $d_0$, where $d_0$ is the point with the highest value on the correlation response.

10. The method of claim 7 wherein said fitting step comprises the step of fitting a quadratic with best least squares fit.

11. The method of claim 1 wherein said capturing step comprises the steps of:
directing a pair of cameras at the substrate such that the images obtained by the cameras correspond to the same area of the substrate;
obtaining the image of the material on the substrate from each camera; and
digitizing the images.

12. The method of claim 1 wherein the step of calculating the volume comprises the steps of
determining the center of area of the correlation response; and
multiplying the center of area of the correlation response by the area of the correlation window to obtain the volume in cubic pixels.

13. The method for measuring the volume of material on a substrate comprising the steps of:

capturing a pair of binocular stereo images of the material;

filtering each of said captured images;

correlating said filtered images at various relative alignments of said images within a correlation window to generate a correlation value for each of said alignments;

determing the center of area of the correlation response; and

calculating the volume of material from the center of area by multiplying the center of area of the correlation response by the area of the correlation window to obtain the volume in cubic pixels.

14. The method of claim 13 wherein said determining step comprises the step of finding the center of symmetry of the correlation response within two regions of constant gradient.

15. The method of claim 14 wherein said finding step comprises the steps of:

computing a measure of asymmetry at selected alignments to generate a set of points;

fitting a curve to the generated set of points; and

finding the location of the minimum of said curve.

16. The method of claim 15 wherein said computing step comprises the steps of:

a) evaluating $S(d_0)$ at a point $d_0$; where $S(d)$ is a measure of asymmetry at a point $d$;

b) evaluating $S(d_i)$ at a set of points $d_i$), around the point $d_0$;

c) comparing $S(d_0)$ to the $S(d_i)$ evaluated at the set of points around $d_0$ to determine whether $S(d_0)$ is smaller than $S(d_i)$;

d) if $S(d_0)$ is not smaller than $S(d_i$ selecting another point for $d_0$ and repeating steps a), b) and c); and

e) if $S(d_0)$ is smaller than $S(d_i)$, generating a set of points having asymmetry values $S(d_0)$ and $S(d_i)$.

17. The method of claim 16 wherein step a) comprises the step of evaluating $S(d_0)$ at a point $d_0$, where $d_0$ is the point with the highest value on the correlation response.

18. The method of claim 15 wherein said fitting step comprises the step of fitting a quadratic with best least squares fit.

19. The method of claim 13 wherein said capturing step comprises the steps of:

directing a pair of cameras at the substrate such that the images obtained by the cameras correspond to the same area of the substrate;

obtaining an image of the material on the substrate from each camera; and

digitizing the images.

20. The method of claim 19 wherein said filtering step comprises the steps of:

applying a Gaussian convolution operator to each of said captured images to remove some of the higher spatial frequencies; and

applying a Laplacian operator to each of said images.

21. The method of claim 19 wherein said correlating step further comprises the steps of:

comparing the signs of said filtered images at various relative alignments within a correlation window; and combining the results of the comparing step for all point in said correlation window to generate a correlation response as a function of the relative alignments.

FIG._1.

FIG._2.

FIG._3.

FIG._6.

FIG.__4a.

FIG.__4b.

FIG.__5a.

FIG.__5b.

FIG.__7.

FIG.__8.

# Direct Volume Measurement of Three Dimensional Features in Binocular Stereo Images

*Neil Hunt*

*P. A. Crossley*

*H. K. Nishihara*

Schlumberger Palo Alto Research

3340 Hillview Avenue

Palo Alto

CA 94304

December 28, 1987

## Abstract

We describe a method of measuring the volume of three dimensional objects such as a pile of sand or a blob of solder paste on some flat substrate, using pairs of digitised stereo images of the objects.

Our analysis models a topological surface as a collection of flat fopped mesas. each at some distinct height above the substrate. In the limit as the size of the individual mesas becomes vanishingly small, this model can be made to approximate any arbitrary shape.

The stereo images obtained from two cameras are filtered to reduce noise, to emphasise detail at a particular scale, and to obtain positions

1

of edges in the data at that scale. The sign bits of the two processed images are then cross correlated, at a variety of offsets. Each flat facet contributes to the resulting correlation curve; the contributions have a peak with height proportional to the area of the facet, and position dependent upon the height of the facet.

Under certain conditions, a single overall peak position can be measured from this composite curve; This peak position corresponds to the mean disparity of the image over the area of the images which were correlated. This can then be translated to the height above the substrate, and by multiplying by the area of the correlation, to the volume of the object.

# 1   Introduction

In many manufacturing situations, it is desirable to measure the volume of a piece of material whose shape is only roughly determined. We discuss a method for measuring volume of such materials by observing the material with a pair of cameras to obtain a pair of stereo images, which can be digitised and processed electronically to obtain the volume.

The technique is particularly interesting in situations where some of the following conditions apply:

- The material cannot be weighed easily (for example where many depositions of material are made on a single substrate, where the weight of the material is small compared to that of the substrate on which is it deposited, or where the weight of the substrate or container is unknown).

- The density of the material is unknown or variable, for example garbage or wood chips, or is to be determined.

- The volumes are very small. Optical techniques for obtaining images are straightforward (using stereo microscopes, for example), while weighing small masses is very hard in many cases.

- The material is placed with approximate shape and position known so that the imaging system may be directed at the volume to be measured.

- The material is placed upon a substrate or in a container whose position or shape is known (or can be determined, perhaps by an additional correlation measurement).

This method could find uses in applications from solder paste inspection, cookie and bread baking, counting of small objects (pills, screws, ball bearings, etc), cartography from aerial images and garbage collection monitoring.

## 1.1 Background

Traditionally, stereo images have been used to obtain *height* measurements. By locating the same feature in both images, and determining the disparity between the two positions, the height (distance from the cameras) can be calculated. Julesz [1960] performed some early investigations of the stereo capability of the human visual system, and stereo has been a topic of interest in computer vision research ever since. Work at MIT, and more recently here at Schlumberger, has developed a practical technique for making depth measurements using stereo, including a hardware implementation of an algorithm, enabling measurements to be made very fast [Nishihara, 1984].

We have extended these ideas to allow the volume of an object to be measured directly, without having to make a dense depth map over the image, and then integrate numerically.

## 2 Description of the Method

## 2.1 The Imaging System

Figure 1: A Typical Imaging System

A typical imaging system is shown in figure 1; a flat substrate supports a pile of material viewed by two cameras.

Figure 2 shows the imaging system in more detail. The imaging planes (the film of the camera or the surface of the CCD in a video camera, for example) are parallel to the substrate to minimise trapezoid distortion. One possibility is to use a conventional camera fitted with a *shift lens*; another is to use a stereo microscope with camera mounts on the eyepieces.

The lenses of the cameras are at a height $H$ units from the substrate, a distance $F$ units from the imaging surface, and are separated by $S$ units. They are laterally displaced from the centres of the imaging surfaces, so that the images obtained both correspond to the same area of the substrate. That is, any point on the substrate in the field of view in the camera will appear in the *same* position in both images[1]. If a pixel on the imaging

---

[1] In practice, the images will not be perfectly aligned, and a calibration measurement will be made, looking at the substrate with no material on it, to determine the actual reference disparity between the two images of the substrate. This reference disparity

Figure 2: Imaging Geometry

surface has a width of $\frac{F}{H}\alpha$ units, this corresponds to a region of size $\alpha \times \alpha$ units near the substrate[4].

Consider the point $P$ at a height $h$ units above the substrate. In the image obtained in the left camera, this projects to the point $P_L$ on the substrate plane, and in the right camera to the point $P_R$ on the substrate plane, giving a disparity of $d_P$ pixels, or $\alpha d_P$ units. By the properties of similar triangles, we can see that: $\frac{\alpha d_P}{h} = \frac{S}{H-h}$ or

$$d_P = \frac{hS}{\alpha(H - h)}. \tag{1}$$

The point $Q$ similarly projects to $Q_L$ and $Q_R$ with a disparity of $\alpha d_Q$. Again

---

is then subtracted from the subsequent disparity measurements to obtain the correct measurements.

[2]It is conventional to measure the pixel size of a camera at the imaging plane. If the pixels have a non unity aspect ratio, a different factor $\alpha_h$ and $\alpha_v$ will be used for each dimension.

by the properties of similar triangles: $\frac{\alpha d_Q}{h} = \frac{S}{H-h}$, or

$$d_Q = \frac{hS}{\alpha(H-h)}. \qquad (2)$$

From equations 1 and 2 we see that $d_P = d_Q$. This means that the disparity observed for a point at some height $h$ units above the substrate is the same wherever that point appears in the field of view of the cameras. Further, when $h \ll H$, the disparity $d$ pixels measured at the substrate is given by

$$d \approx \frac{S}{\alpha H}h. \qquad (3)$$

This means that the measured disparity of a point is proportional to the height of that point above the substrate over the entire field of view, and over the range of height where $h \ll H$, so we can talk about height above the substrate in terms of pixels of disparity.

Figure 3 shows a stereo pair of a quantity of sugar, obtained using a stereo microscope with a geometry as described. (The images have been swapped in the figure so that the left image is on the right, and vice-versa, for cross-eye viewing.)

## 2.2   Filtering

We convolve the images with a two dimensional Gaussian function

$$G_\sigma = \frac{1}{\sigma\sqrt{2\pi}}e^{-(\frac{x^2+y^2}{2\sigma^2})} \qquad (4)$$

where the parameter $\sigma$ determines the scale of the features of the image which are retained. A Laplacian operator is then applied

$$L = \left(\frac{\partial^2}{\partial x^2} + \frac{\partial^2}{\partial y^2}\right) \qquad (5)$$

6

Figure 3: Stereo Pair of a Quantity of Sugar

to obtain the second derivative of this image, such that the zero crossings in the image correspond to edges in the features at a scale appropriate to $\sigma$ in the original images. In practice, the convolution operations are commutative, and it is preferable to apply the Laplacian first, to reduce image degradation due to rounding error.

The impulse response of the Laplacian of Gaussian filter function with parameter $\sigma$ has the so called *Mexican hat* shape[3], where the width $w$ of the central cone between zero crossings [4] is given by

$$w = 2\sqrt{2}\sigma. \tag{6}$$

Figure 4 shows the sign bit of the sugar images filtered with a Laplacian and a Gaussian with $\sigma = 4.0$ ($w = 11.3$) pixels. The sign bit of such an image captures both the edge positions and also the sign of the edge slopes. The widths of the positive and negative regions in this image are roughly $w$ pixels.

## 2.3 Correlation

We take the sign bit of the filtered images, and perform cross correlation

$$R(u, v) = \frac{1}{A} \sum_{i=1}^{X} \sum_{j=0}^{Y} \operatorname{sign}(left_{i,j}) \operatorname{sign}(right_{i+u,j+v}) \tag{7}$$

for alignments $(u, v)$ between the two images within a window of area $A = X \times Y$, where $left_{i,j}$ is the $(i,j)^{th}$ pixel of the left image, and similarly $right_{i,j}$ is the $(i,j)^{th}$ pixel of the right image. Thus $R$ forms a surface, whose value at some point $(u, v)$ lies between $-1$ and $1$, indicating how well the two images matched at that alignment.

---

[3]Actually, the impulse response is an upside down Mexican hat shape

[4]Note that this is for the two dimensional case; for a one dimensional Laplacian of Gaussian, the relationship is given by $w = 2\sigma$

Figure 4: Sign Bit of Laplacian of Gaussian ($\sigma = 4.0$ pixels)

## 2.4 Interpretation

Figure 5: Single Peak Correlation Curve ($\sigma = 4.0$ pixels)

Conventionally the scene would be assumed flat within the area of the correlation window, and a single correlation peak would be obtained at some alignment of $(u_0, v_0)$. In the stereo imaging case, the horizontal disparity $u_0$ is related to the height of the surface within the correlation window by equation 3, and ideally the vertical disparity is zero, (unless there is trapezoidal distortion). A horizontal cross section through such a correlation response at $v_0 = 0$ has a form such as that shown in figure 5, obtained with images which had been filtered with a Gaussian of size $\sigma = 4$. The width of the peak at zero is approximately $w$, or $2\sqrt{\sigma}$.

In the method we propose, the correlation window is large, covering the entire object whose volume is to be determined, and may include surfaces

10

Figure 6: Multiple Peak Correlation Curve ($\sigma = 4.0$ pixels)

at different levels, having different disparities. In such cases, the simple response of figure 5 becomes a more complex shape such as that in figure 6. If $\psi(u)$ is the histogram of surface area at each disparity $u$, and $R(u)$ is the autocorrelation function of the sign of the filtered images, then a model of the stereo cross correlation function is $\psi(u) \star R(u)$, where $\star$ denotes convolution. Since we know the approximate form of $R(u)$, we should like to deconvolve this from the measured cross correlation response to obtain the disparity histogram $\psi(u)$, and hence the volume.

Consider a mesa of area $\Delta$ (measured in square pixels) and height $h$ units in the image, where $h$ units corresponds to a disparity of $d$ pixels. This will contribute a cone shaped correlation response at position $(d, 0)$ in the correlation surface. In an ideal case, the height of the peak in this contribution, $p$, would be given by the fraction of the correlation window area which aligned perfectly at $d$, that is $\frac{\Delta}{A}$. In practice, as mentioned above, the presence of noise in the image alters the ideal shape of the response, reducing the height of the peak, by some factor, say $k$. Therefore the height of the peak in this contribution is

$$p = k\frac{\Delta}{A}, \tag{8}$$

and a cross section through the contribution at $v = 0$ may be approximated by a triangular shape near the peak

$$r(u) \approx \frac{k\Delta}{A}\left(1 - \frac{2|u - d|}{w}\right) \tag{9}$$

over the range $d - \frac{w}{2} < u < d + \frac{w}{2}$, and zero elsewhere, as shown in figure 7.

Now consider the correlation window to be divided into $N$ small regions $i$, each at a height $h_i$ units corresponding to a disparity $d_i$ pixels. Now the correlation surface is the superposition of the curves due to each small region. We have the area equivalence

$$A = \sum_{i=1}^{N} \Delta_i, \tag{10}$$

12

Figure 7: Approximation of Correlation Curve Shape

(measured in square pixels) and the total volume of the material being measured is:

$$V = \sum_{i=1}^{N} \Delta_i d_i \qquad (11)$$

in cubic pixels[5]. The problem is to obtain this volume from the shape of the combined correlation response curve such as that in figure 6.

We can take moments about the origin along the $u$ (disparity) axis for a single contribution $i$:

$$M_i = \int_{-\infty}^{\infty} r_i(u) \, u \, du. \qquad (12)$$

Applying a shift of centre to $d_i$, we have:

$$M_i = \int_{-\infty}^{\infty} r_i(u) \, (u - d_i) \, du + d_i \int_{-\infty}^{\infty} r_i(u) \, du. \qquad (13)$$

Since $r_i(u)$ is symmetrical about the point $u = d_i$, the first term in equation 13 is zero. The integral in the second term is simply the area of the triangle of the contribution, $a_i = \frac{1}{2} w p_i$, giving:

$$M_i = \frac{1}{2} w p_i d_i. \qquad (14)$$

The moment of all the contributions combined is simply the sum of the moments of each individual contribution:

$$M = \frac{w}{2} \sum_{i=1}^{N} p_i d_i. \qquad (15)$$

If we divide this by the area under the combined response

$$a_{tot} = \frac{w}{2} \sum_{i=1}^{N} p_i, \qquad (16)$$

---

[5]We use cubic pixels as a volume measure where pixels in the horizontal plane (parallel to the imaging planes) have a size of $\alpha$. and pixels in the vertical plane, referring to pixels of disparity, have a size of $\frac{\alpha H}{S}$, from equation 3.

14

we obtain an expression for the *centre of area* of the combined response:

$$d_{centre} = \frac{\sum_{i=1}^{N} p_i d_i}{\sum_{i=1}^{N} p_i} \qquad (17)$$

Substituting for $p_i$ from equation 8 and removing the resulting factor $\frac{k}{A}$ from both the numerator and denominator, this becomes:

$$d_{centre} = \frac{\sum_{i=1}^{N} \Delta_i d_i}{\sum_{i=1}^{N} \Delta_i} \qquad (18)$$

By equation 11, the numerator is simply the volume of the material which is being measured (in cubic pixels), while by equation 10 the denominator is the area of the correlation window (in square pixels).

$$d_{centre} = \frac{V}{A} \qquad (19)$$

This means that $d_{centre}$ can be considered as a mean disparity over the correlation window, and to obtain the volume of the material being measured, we simply find the centre of area of the correlation response, $d_{centre}$, and multiply by the area of the correlation window, $A$, to obtain the volume in cubic pixels.

$$V = A d_{centre} \qquad (20)$$

Multiplying the horizontal dimensions by $\alpha$ and the height dimension by $\frac{\alpha H}{s}$ gives us the volume in cubic units: $\alpha^2 \frac{\alpha H}{s} V$.

# 3  Problems

We have shown that the volume of the material being imaged may be obtained (in theory) by finding the centre of area of the correlation curve, and multiplying this by the area of the correlation window (which of course must be large enough to contain the entire pile of material being measured). Unfortunately, the determination of the centre of area requires integrating the correlation curve from $-\infty$ to $\infty$. We know that the ideal correlation

curve falls to zero rapidly outside the region of the peak, so it is possible to perform the measurement by ntegrating over a finite distance say from $w$ below the zero disparity point to $w$ above the greatest disparity expected in the image, and indeed this obtains approximate results. However, the measurement made in this fashion is exceptionally sensitive to the fluctuations of the correlation curve away from the region of the peak, and thus has a poor accuracy. For practical situations, an alternative technique of extracting the mean disparity $d_{centre}$ from the combined correlation response curve is needed.

Noise in the image may be considered as random small perturbations of each pixel value. This results in a few pixels changing sign in the Laplacian of the Gaussian image. Near the peak of the correlation response, the few pixels which have been corrupted by noise are insignificant next to the large value of the correlation, but where the correlation value is small, away from the peak, the noise is much more significant. Therefore, a reliable measurement will be based upon measurements of the curve shape near the region of the peak.

Figure 8: Response Combination

Consider a collection of response contributions due to regions of the correlation window which have a disparity range varying from 0 (the disparity of the substrate), and some maximum value $d_{max}$, where $d_{max} \ll \frac{w}{2}$. Assume that each peak is approximated by the triangular shape described earlier. Figure 8 shows a combination of three such responses.

1. For $u < -\frac{w}{2}$ or $u > d_{max} + \frac{w}{2}$, none of the individual responses contributes anything to the combined response, which therefore has zero value.

2. In the range $-\frac{w}{2} < u < -\frac{w}{2} + d_{max}$, each of the individual responses starts to contribute to the total, and the combined curve has a monotonically increasing gradient.

3. In the range $-\frac{w}{2} + d_{max} < u < 0$, all the individual responses are on the rising slope of their peak, and the combined response has a constant gradient equal to the sum of the gradients of the individual responses.

4. Each of the individual responses reaches a maximum in the range $0 < u < d_{max}$; as each changes from a positive gradient to a negative gradient, the gradient of the combined slope reduces in steps from the maximum gradient which it had in the region 3, to a gradient of the same magnitude with opposite sign.

5. The region where $d_{max} < u < \frac{w}{2}$ is analogous to region 3; the gradient of the combined slope is a constant negative value.

6. The region where $\frac{w}{2} < u < \frac{w}{2} + d_{max}$ is analogous to region 2, with a gradient magnitude reducing to zero in steps as each individual response reaches zero.

The straight sides of such a combined curve (in regions 3 and 5) offer the possibility of making the measurement of the mean disparity for the combined curve, using only data where the values are large enough that the contribution due to noise is small. We shall now show that the centre of area of this combined response is in fact the centre of symmetry for these

two regions of the curve.

Let the centre of symmetry for the curve in regions 3 and 5 be the point $d_{sym}$, on the u axis between 0 and $d_{max}$. Now consider two points $d_{sym} - x$ and $d_{sym} + x$, where $x$ is chosen so that these two points fall in regions 3 and 5 respectively. Using equation 9, the value of the $i^{th}$ response, $r_i$, at $u = d_{sym} - x$ is

$$r_i(d_{sym} - x) = \frac{k\Delta_i}{A}\left(1 - \frac{2(d_i - (d_{sym} - x))}{w}\right) \tag{21}$$

and at $u = d_{sym} + x$

$$r_i(d_{sym} + x) = \frac{k\Delta_i}{A}\left(1 - \frac{2((d_{sym} + x) + d_i)}{w}\right) \tag{22}$$

When all the individual curves are taken into account, we obtain two similar equations for the value of the total correlation curve at each of these two points.

$$R(d_{sym} - x) = \frac{2k}{Aw}\sum_{i=1}^{N}\Delta_i\left(\frac{w}{2} - d_i + d_{sym} - x\right)$$
$$= \frac{2k}{Aw}\left\{(\frac{w}{2} + d_{sym} - x)\sum_{i=1}^{N}\Delta_i - \sum_{i=1}^{N}\Delta_i d_i\right\} \tag{23}$$

$$R(d_{sym} + x) = \frac{2k}{Aw}\sum_{i=1}^{N}\Delta_i\left(\frac{w}{2} - d_{sym} - x + d_i\right)$$
$$= \frac{2k}{Aw}\left\{(\frac{w}{2} - d_{sym} - x)\sum_{i=1}^{N}\Delta_i + \sum_{i=1}^{N}\Delta_i d_i\right\} \tag{24}$$

But we defined $d_{sym}$ to be the centre of symmetry for the correlation curve in regions 3 and 5, so that $R(d_{sym} - x) \equiv R(d_{sym} + x)$, for values of x giving points within regions 3 and 5, $d_{max} < x < \frac{w}{2} - d_{max}$. Using equations 23 and 24, and cancelling the common factor $\frac{2k}{Aw}$, we have:

$$(\frac{w}{2} + d_{sym} - x)\sum_{i=1}^{N}\Delta_i - \sum_{i=1}^{N}\Delta_i d_i = (\frac{w}{2} - d_{sym} - x)\sum_{i=1}^{N}\Delta_i + \sum_{i=1}^{N}\Delta_i d_i \tag{25}$$

18

Cancelling $\frac{w}{2}$ and $-x$ on both sides, and collecting terms gives:

$$d_{sym} \sum_{i=1}^{N} \Delta_i = \sum_{i=1}^{N} \Delta_i d_i \qquad (26)$$

Dividing by the area term gives us an identical expression for $d_{sym}$ as equation 18:

$$d_{sym} = \frac{\sum_{i=1}^{N} \Delta_i d_i}{\sum_{i=1}^{N} \Delta_i} \qquad (27)$$
$$= d_{centre}$$

This means that if we can find the centre of symmetry of the two constant gradient regions (3 and 5) of the correlation curve, this can be used as a better measurement of $d_{centre}$ to obtain the volume of the material being imaged, according to equation 20.

## 3.1 Finding the Centre of Symmetry

We now describe a method for finding the centre of symmetry of the correlation curve within the regions of constant gradient as described above.

We define a measure of asymmetry at a point $d$ to be the sum of the squares of the difference between the values of the correlation curve at $d - x$ and $d + x$ for x in an appropriate range:

$$S(d) \equiv \sum_{i=x_{lo}}^{x_{hi}} \left( R(d - x_i) - R(d + x_i) \right)^2 \qquad (28)$$

where $x_{lo} = d_{max}$ and $x_{hi} = \frac{w}{2} - d_{max}$. This equation can be solved for positions $d$ either lying on an integral pixel position, or at a half pixel position; in both cases, the same number of differences are computed, squared and summed.

In practice, the range of $d_{max} \leq x \leq \frac{w}{2} - d_{max}$ can be extended slightly, to maximise the amount of data used in the experiment, with the assumption

19

that the centre of symmetry is unlikely to be very near to either the $d = 0$ or the $d = d_{max}$ end of the range of possibilities. For example, $\frac{d_{max}}{2} \leq x \leq \frac{w}{2}$ is a reasonable range.

First an estimate of the position of the centre of symmetry is made by finding the highest point in the correlation curve, say $d_0$, and the symmetry measure $S(d)$ is evaluated for the five points $d_0 - 1$, $d_0 - 0.5$, $d_0$, $d_0 + 0.5$, and $d_0 + 1$. If $d_0$ is very close to the centre of symmetry, then $S(d_0)$ will be smaller than the other four values. If this is not the case, a new estimate $d_1$ is chosen half a pixel above or below $d_0$, depending upon whether the smaller value of $S(d)$ was obtained above or below $d_0$. This procedure is repeated for each estimate $d_i$ until the best estimate $d_n$ is located, $d_n$ taking on integral or half pixel values.

At this point, the five values $S_{-1} = S(d_n - 1)$, $S_{-0.5} = S(d_n - 0.5)$, $S_0 = S(d_n)$, $S_{0.5} = S(d_n + 0.5)$, and $S_1 = S(d_n + 1)$ are obtained. These points lie on a curve, which should have a minimum near $d_n$, which is the centre of symmetry. The five points are used to obtain the parameters of a quadratic with best least squares fit. Such a quadratic has a form

$$S = ad^2 + bd + c \qquad (29)$$

where $a$, $b$ and $c$ are constants to be determined. Differentiating equation 29, and equating to zero gives a gives an equation for $d_{min}$, the value of $d$ for which the asymmetry measure is minimum:

$$0 = 2ad_{min} + b \qquad (30)$$

Solving for the least squares fit, and applying the values of $a$, $b$, and $c$, we obtain

$$d_{min} = \left(\frac{7}{20}\right)\left(\frac{2S_{-1} + 1S_{-0.5} - 1S_{0.5} - 2S_1}{2S_{-1} - 1S_{-0.5} - 2S_0 - 1S_{0.5} + 2S_1}\right) + d_n \qquad (31)$$

which is an estimate of $d_{centre}$, and can be substituted in equation 20 to obtain the volume of the material being imaged.

20

# 4   Experimental Results

We performed two classes of experiment to test the method described. First, we generated some synthetic stereo pairs using random dot textures, with disparities applied according to a depth map specification. The program which generated the random dot image pairs calculated the exact volume, in cubic pixels, which should be calculated by application of our method. These experiments were made to test the implementation of the algorithm, and ensure that the equations had been correctly programmed. The second set of experiments was designed to test the algorithm on some real images, with noise and distortion which might be expected in a real application. We took some powdered substances (sugar and dried milk) and made sets of stereo pairs with the same amount of powder in each case. These images were obtained using a stereo microscope with camera attachments. Since we had no alternative method of measuring the volume of the piles of powder, the experiment was considered a success if the algorithm returned the same volume for each of the stereo pairs in a set.

## 4.1   Synthetic Images

Four synthetic images were made simulating depth profiles as shown in figures 9 – 12, and a fifth was made with a zero depth profile for calibration purposes. Each image was convolved with a Laplacian, a Gaussian of size $\sigma = 8.0$, and correlated within a $320 \times 320$ window as described above. The symmetry measurements were made over the range $5 \leq x \leq 12$. Table 1 shows the results obtained. The worst error is 3.9%, which is obtained for the example image with the largest disparity, possibly because this range of disparity is larger than the limits imposed by the filtering, and by the range of $x$ in the symmetry determination phase. This seems to suggest that the method is working, to a reasonable level of accuracy.

21

Figure 9: Depth Profile of Synthetic Image Example 1

Figure 10: Depth Profile of Synthetic Image Example 2

Figure 11: Depth Profile of Synthetic Image Example 3

Figure 12: Depth Profile of Synthetic Image Example 4

| Example | $d_{centre}$ | Measured Volume Cu. pix | Actual Volume Cu. pix. | Error % % |
|---------|--------------|--------------------------|-------------------------|-----------|
| 1 | 3.57 | 365600 | 362310 | 0.9 |
| 2 | 3.76 | 385000 | 370332 | 2.9 |
| 3 | 5.19 | 531500 | 541390 | -1.8 |
| 4 | 3.42 | 350400 | 352975 | -0.7 |

Table 1: Experimental Results with Synthetic Images

24

## 4.2 Real Images

Two stereo pair images of the same quantity of sugar were obtained using the stereo microscope; see figures 13 and 14. Each image was convolved with a Laplacian, a Gaussian of size $\sigma = 8.0$, and correlated within a $400 \times 420$ window as described above. The symmetry measurements were made over the range $5 \leq x \leq 12$. Table 2 shows the results obtained. We had no method of corroborating the actual volume as measured in this experiment, but the same quantity of sugar was reconfigured to make the second pair of images, and the results are the same within 6% suggesting that the method works as expected.

| Example | $d_{centre}$ | Measured Volume Cu. pix. |
|---------|--------------|--------------------------|
| 1 | 1.09 | 182100 |
| 2 | 1.16 | 194900 |

Table 2: Experimental Results with Sugar Images

Figure 13: Stereo Pair of a Pile of Sugar Example 1

Figure 14: Stereo Pair of a Pile of Sugar Example 2

Three stereo pair images of the same quantity of dried milk were obtained using the stereo microscope; see figures 15 – 16. Each image was convolved with a Laplacian, a Gaussian of size $\sigma = 16.0$, and correlated within a $400 \times 420$ window as described above. The symmetry measurements were made over the range $10 \leq x \leq 12$. Table 3 shows the results obtained. Again we had no method of corroborating the actual volume as measured in this experiment. As the table shows, the measurement for example 2 is considerably different from those for examples 1 and 3. We believe that this is due to a combination of factors:

1. The pile of milk in example 2 was very high, about 40 pixels disparity and the top is considerably out of focus. This changes the spatial frequency characteristics of the image near the high point of the pile, and broadens the shape of the cross correlation function for the part of the image.

2. The height of the pile of milk may be greater than that assumed in equation 3, such that $H$ is no longer much greater than $h$, which would tend to enlarge the measurement, and also the magnification near the top of such a high pile may be considerably greater than near the substrate.

The other two measurements are closer, and indicate that the method works.

| Example | $d_{centre}$ | Measured Volume Cu. pix. |
|---------|--------------|--------------------------|
| 1 | 6.75 | 1134000 |
| 2 | 9.06 | 1522000 |
| 3 | 6.07 | 1020000 |

Table 3: Experimental Results with Milk Images

28

Figure 15: Stereo Pair of a Pile of Dried Milk Example 1

Figure 16: Stereo Pair of a Pile of Dried Milk Example 2

30

Figure 17: Stereo Pair of a Pile of Dried Milk Example 3

# 5 Hardware Implementation

This method for measuring volume is ideally suited for implementation on special purpose digital computing hardware. One such a system is described by Nishihara [1986].

A set of convolver boards perform the Laplacian and Gaussian convolutions on both of the images at frame rate. The sign bit of these images are then loaded into a correlator which makes comparisons at $5 \times 10^7$ pixels per second. On the synthetic images described above, it can perform a correlation measurement at five alignments in parallel in 0.01 seconds, and can compute the 25 alignments needed to complete the measurement in 0.05 seconds. The additional curve fitting and analysis is easily performed by a general purpose computer attached to the processing boards in this time; thus we could make up to 20 volume measurements a second, subject to mechanical considerations Additional speed up can be obtained by using multiple correlators in parallel.

An alternative hardware implementation of the correlation subsystem is described in another document.

# 6 Considerations

## 6.1 Image Texture

The exact shape of the correlation peak is dependent upon the the nature of the images which are being correlated. We have assumed, for the calculations described, that the peak shape can be approximated by a triangular shape.

Nishihara [1984] describes the shape of the autocorrelation of a Gaussian

32

Figure 18: Shapes of Correlation Peaks: top: Autocorrelation of filtered image; middle: Autocorrelation of sign of filtered image. bottom: Triangular shape approximation.

white noise signal filtered by a Laplacian and Gaussian filter of width $w$ as:

$$R_c(u) = k \left( 1 - \frac{4u^2}{w^2} + \frac{2u^4}{w^2} \right) e^{\frac{-2u^2}{w^2}} \qquad (32)$$

with the autocorrelation of the sign of the same signal as:

$$R_s(u) = \frac{2}{\pi} \sin^{-1} \left[ \frac{R_c(u)}{R_c(0)} \right]. \qquad (33)$$

This is quite close to the triangular shape which is assumed here. (See figure 18.) However, real images tend to be weighted more towards the lower spatial frequencies than the strictly white noise model. Using pink noise with a power spectrum proportional to

$$\frac{1}{(f_0^2 + f^2)^{\frac{3}{2}}}, \qquad (34)$$

where $f_0$ is a constant, Nishihara indicates that the peak shape is broadened.

If the auto-correlation function is symmetrical about the zero, the stereo cross-correlation contribution due to a single elemental mesa in the volume being measured will still have a centre of area at a disparity proportional to the height of the mesa. However, if the width of the auto-correlation function varies between different mesas, the area of each contribution will no longer be proportional to the area of the mesa responsible. This should not be a problem where the material being imaged has a constant texture, regardless of whether that texture is accurately modelled by the white noise, pink noise, or some other function. However, where the texture varies in a systematic way with height, a systematic error will be observed in the measurement. A particular case is when the higher portions of the image are less well focussed by the imaging system that the lower portions. In this case, we might expect the spectrum of the higher regions to emphasise the lower spatial frequencies more that that of the lower regions of the image. In this case, the contributions of mesas of a greater height to the overall correlation response will have greater width, and hence will add more weight to the centre of area calculation at the greater disparity end of the curve, biasing the result toward an over-indication of the true volume.

34

This observation is consistent with the error observed in the measurement of the pile of milk in example 2 above, where the measured volume appeared larger than expected, possibly due to the top of the pile being considerably out of focus.

This suggests that the technique should be used where the material to be measured has a homogeneous texture, remaining accurately in focus over its entire height. Also, the spectrum of the substrate ideally should match that of the pile of material.

## 6.2 Effect of Noise

As discussed earlier, the effect of noise in the images is to lower the height of the auto-correlation peak, and to round its top. Again, if the shape is the peak is symmetrical, and the peak has the same shape and width for the contribution due to each mesa, where the area under the contribution to the correlation response is proportional to the area of the mesa responsible for that peak, then the centre of area measurement will still yield the correct result.

If the peak shape becomes too rounded, the size of the shoulders of the responses where the gradient is essentially constant becomes small, compromising the ability to apply the symmetry method described above to estimate the centre of area.

Also, if the noise in the image varies systematically with height of the imaged surface above the substrate, then there will be a systematic error in the result, by the same arguments as used in the analysis of the effect of varying texture in the images.

# 6.3  Determining a Level of Confidence

In conventional stereo depth measurements, the height of the peak in the correlation response gives an estimate of the reliability of the depth measurement obtained from that measurement. If the image patches which are being correlated are very noisy, or if the shape of the surface is very irregular, the peak height is lowered from its nominal height of unity, indicating that a lower confidence should be placed in the disparity measurement.

Since the peak does not have a simple shape as in the conventional stereo case, the height of the peak is not a useful indicator. However, the area beneath the combined correlation response can be used in a similar manner. The height of a correlation response contribution due to a single mesa is proportional to the ratio of the area of the mesa compared to the area of the correlation window, with the factor $k$ (see equation 8) which is reduced from an ideal value of unity by the presence of noise and distortion in the images. The area beneath the contribution descreases with decreasing $k$, even if not directly proportionally (as the shape of the response also changes). The area under the combined response is just the sum of the areas under the individual contributions, and so will also reduce with reducing $k$. The ideal area can be calculated by considering the ideal response of the system to a pile of material of zero volume, with a flat surface, giving a simple peak of unity height, and width $w$, thus with area $\frac{w}{2}$. If the measured area under the correlation response in a particular example is significantly less than this value, then a low confidence should be assigned to the corresponding result.

The measurement technique is based upon the determination of the centre of symmetry in a particular region of the combined correlation response. This is achieved by computing a measure of asymmetry $S(d)$ (equation 28) at various disparities $d$, fitting a curve to these points, and finding the minimum. The value of the curve at this minimum $S(d_{sym})$ gives an estimate for the asymmetry of the response at the disparity chosen for computation of the result. This value should be near zero; if it is not, this is an indication that there are parts of the image with disparity greater

36

than the maximum disparity assumed, or that the shape of the peaks has deviated far from the assumed triangular shape, possibly due noise in the image. Again, the result obtained should be assigned a lower confidence level.

# 7 Applications

We have developed a method for measuring the volume of piles of material on a flat substrate. The measurements seem to be accurate to about 10% with the current algorithm. It is expected that tuning the algorithm for a specific application would allow improved accuracy. The following list gives examples of applications which could benefit from the use of such a technique.

1. Solder paste is deposited on printed circuit boards by a stenciling or screening process. Components are then placed with their connections embedded in the paste depositions, and the solder is melted by application of heat to secure the joints. It is very important that enough solder be used to wet the joint properly, but too much solder imposes severe strain on the joint leading to cracking due to differential coefficients of thermal expansion. A method for measuring the paste depositions before placing the components and heating is necessary. Ideally, all the depositions (from 1000 to 10000 per circuit board) would be inspected, requiring a fast measurement technique. The primary competition in this application will be from (a) laser range imaging systems, and (b) a related stereo based measurement system described in [Hunt *et al.*, 1987]

2. In the food industry, quantities of dough or mixture are placed on baking trays or in containers by automatic dispensers. Controlling the volume of dough allows consistent product to be cooked, and a method of measuring the volume is desirable. In a further application, the observed volume of bread dough is compared with its weight, to

37

determine its density, and hence how well the dough is rising.

3. Piles of small objects such as pills, screws, ball bearings and so on all offer potential for measurement using these techniques. This is especially interesting where the objects cannot be weighed for some reason, or where the density of the heap is needed, and both the volume and mass are required.

4. Trucks carrying material such as sand, gravel, mud, garbage, which is not in any particular shape can be measured by application of this technique to determine the volume of material loaded. When the empty truck is not available for comparison weighing, this technique may be one way to determine the quantity of material loaded. A separate determination of the elevation of the bed of the truck is needed to compensate for its height difference above the ground, which might be used as the reference for the measurement.

5. The volume of structures and geographical features might be measured from stereo photographs taken from the air. Such measurements might be useful in photo-reconnaissance for assessing the scale of building or excavation or tunnelling efforts.

# 8   Conclusions

We have developed a novel method for measuring volume of a pile of material on a flat substrate, without having to obtain the shape or surface profile of the pile. The method is suitable for implementation in fast hardware, for low cost.

Currently, the technique is of limited accuracy; however, it is good enough for use in applications such as solder paste inspection, where 10% accuracy is adequate for the test being performed. We have several ideas for improving upon the accuracy of the measurement technique.

A conventional technique which competes against this method is to divide the area of the image into a number of smaller regions which may then be

considered locally flat, to compute the depth of each flat region using a similar stereo correlation techique, and then to integrate the depth results over the entire area. If the area of the correlation window is $N^2$, and the disparity range is $d$, both methods have a complexity of $O(N^2 d)$ pixel comparisons. However, the method described here requires less computation to convert the correlation measurements at various disparities into a volume, and so lends itself to a much simpler implementation in hardware, without overloading a general purpose processor with the task of computing the volume from the correlation results.

Another advantage of our technique over the conventional technique is that we can perform some of the low pass convolution optically prior to sampling the image; this then means that we can reduce the resolution of the imaging device significantly which reduces the number of pixel comparisons which need to be performed dramatically, without impairing the accuracy of the results.

A hybrid technique is also possible, subdividing the total area of the image into a series of smaller regions, but not necessarily as small as required in order to assume flatness of the surface in each region. Our technique is applied to each region, and the results are integrated to provide the total volume. For surfaces with smooth variations where such a technique would be expected to reduce the disparity range in each of the regions compared to that of the whole image, such a hybrid technique might improve accuracy, without the additional computational expense of the greater subdivision needed to allow the flatness assumption.

In an extension to the above method, the windows are subdivided recursively in quad-tree style, until the disparity range in each subwindow is small enough for an accurate measurement. The disparity range can be obtained directly from the correlation curve by looking at the width of the response above some threshold value.

In some applications, the expected depth profile of the pile is known prior to the measurement. For example in the solder paste example, the position of the solder paste is known with some accuracy, and the height should be near

39

to the thickness of the screen used to deposit it. In such cases, the stereo pair of the images can be warped according to the expected disparity at each pixel, reducing the disparity range. The measurement now measures the difference between the expected volume and the actual volume, which may be capable of greater accuracy in certain circumstances.

An alternative method for extracting the volume measurement from the correlation response is to deconvolve the shape of an individual correlation response from the overall shape of the correlation curve, yielding the depth histogram for the correlation window. This may or may not create a better measurement than the method we have described.

# References

[Hunt et al., 1987] Neil Hunt, A. P. Crossley, and H. K. Nishihara. *Method for Directly Measuring Area and Volume using Binocular Stereo Vision*. Patent Disclosure, Schlumberger Palo Alto Research, 3340 Hillview Avenue, Palo Alto, California 94304, 1987.

[Julesz, 1960] Bela Julesz. Binocular depth perception of computer generated patterns. *Bell Systems Technical Journal*, 39:1125–1162, 1960.

[Nishihara, 1984] H. Keith Nishihara. Practical real-time imaging stereo matcher. *Optical Engineering*, 23(5):536–545, October 1984.

[Nishihara, 1985] H. K. Nishihara. *A System for Expedited Computation of Laplacian of Gaussian Filters and Correlation of their Outputs for Image Processing*. Patent Disclosure, Schlumberger Palo Alto Research, 3340 Hillview Avenue, Palo Alto, California 94304, 1985.